# EUROPEAN PATENT APPLICATION

(11) **EP 4 525 103 A1**
(43) Date of publication of application: **19.03.2025**
(21) Application number: 23803323.7
(22) Date of filing: 12.04.2023
(51) Int. Cl.: H01M 8/0273, H01M 8/0247

(54) **SEPARATOR INTEGRATED GASKET AND LAMINATE STRUCTURE PROVIDED WITH SAME**

(30) Priority: 11.05.2022 JP 2022077916
(71) Applicant: NOK Corporation, Minato-ku, Tokyo 105-8585 (JP)
(72) Inventor: YUI, Hajime, Fujisawa-shi, Kanagawa 251-0042 (JP); SANO, Yohei, Fujisawa-shi, Kanagawa 251-0042 (JP)
(74) Representative: TBK
(86) International application number: PCT/JP2023/014859
(87) International publication number: WO 2023/218841

(57) **Abstract**

Provided is a separator integrated gasket capable of stably performing a sealing function. A separator integrated gasket includes a first separator component 110 and a second separator component 120 joined to the first separator component 110 in a superposed manner, the first separator component 110 has a first elastic member 140 provided in a planar region of the first separator component 110, and the second separator component 120 has a main bead portion 122 and a second elastic member 150 fixed along the top of the main bead portion 122.

## Description

### [Technical Field]

The present invention relates to a separator integrated gasket and a stacked structure including the same.

### [Background Art]

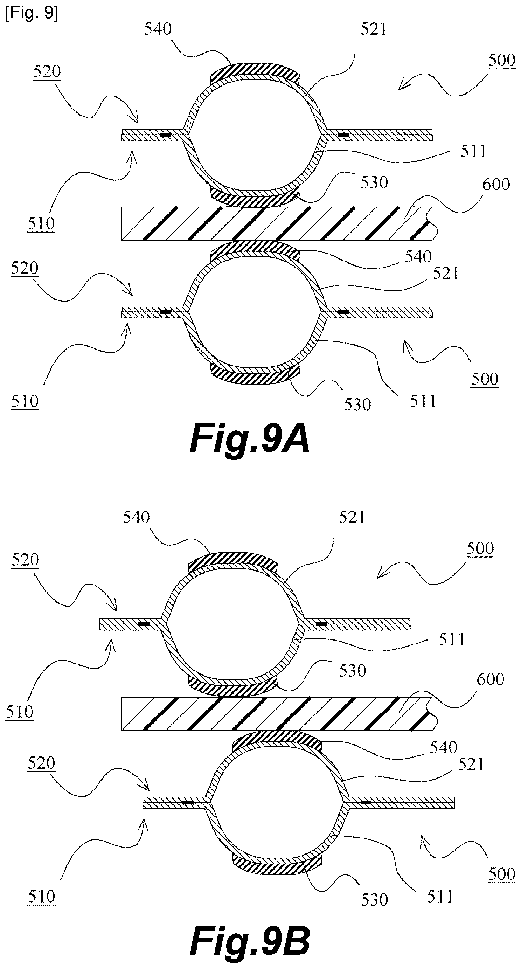

In fuel cells, gaskets are provided to suppress leakage of a fluid such as fuel gas. Conventionally, a separator integrated gasket is known which is a separator constituting a fuel cell configured to have a gasket function in order to enhance the performance related to the assembly of the fuel cell. Fig. 9 shows schematic cross-sectional views of a portion of a fuel cell having a separator integrated gasket of conventional art.

The fuel cell has a structure in which separators 500 and a membrane unit 600 having an electrolyte membrane are alternately stacked. The separators 500 shown each include a first separator component 510 and a second separator component 520 joined to the first separator component 510 in a superposed manner. The first separator component 510 includes a bead portion 511 surrounding a sealed region and an elastic member 530 fixed along the top of the bead portion 511. Similarly, the second separator component 520 includes a bead portion 521 surrounding the sealed region and an elastic member 540 fixed along the top of the bead portion 521.

In the fuel cell configured as described above, the membrane unit 600 is pressed by the elastic member 530, which is fixed to the top of the bead portion 511 of the first separator component 510, and the elastic member 540, which is fixed to the top of the bead portion 521 of the second separator component 520. Accordingly, a high surface pressure peak is achieved, which can lead to better sealing performance.

Here, Fig. 9A shows a state in which the separators 500 and the membrane unit 600 are stacked with high positioning accuracy. In this case, favorable sealing performance can be obtained as described above. However, as shown in Fig. 9B, if the positioning accuracy of the separators 500 and the membrane unit 600 is low and the separators 500 and the membrane unit 600 are misaligned, the membrane unit 600 is not sandwiched between the top or the vicinity thereof of the bead portion 511 and the top or the vicinity thereof of the bead portion 521. In this case, the surface pressure peak is low, which results in degradation of the sealing performance.

Note that a structure, in which membrane units each having an electrolyte membrane and separators are alternately stacked as described above, can be used not only as a fuel cell but also as a hydrogen generator.

### [Citation List]

### [Patent Literature]

[PTL 1]
Japanese Patent Application Publication No. 2020-198200

### [Summary of the Invention]

### [Technical Problem]

The present invention provides a separator integrated gasket capable of stably performing a sealing function, and a stacked structure including the same.

### [Solution to Problem]

The present invention adopts the following means to solve the above-described problem.

Specifically, the present invention is a separator integrated gasket included in a stacked structure in which membrane units each having an electrolyte membrane and separators are alternately stacked and having a gasket function by including an elastic member configured to come into contact with the membrane unit, the separator integrated gasket including:
a first separator component; and
a second separator component joined to the first separator component in a superposed manner,
the first separator component having a first elastic member provided in a planar region of the first separator component, and
the second separator component having a main bead portion and a second elastic member fixed along the top of the main bead portion.

When viewed in a direction perpendicular to a plane of the planar region, the top of the main bead portion may be provided within an area where the first elastic member is provided.

Further, the present invention is a stacked structure in which membrane units each having an electrolyte membrane and separators are alternately stacked,
the separators being separator integrated gaskets each having a gasket function by including an elastic member configured to come into contact with the membrane unit,
each separator integrated gasket including:
   a first separator component; and
   a second separator component joined to the first separator component in a superposed manner,
   the first separator component having a first elastic member provided in a planar region of the first separator component, and
   the second separator component having a main bead portion and a second elastic member fixed along the top of the main bead portion, and
   when viewed in a direction perpendicular to a plane of the planar region, the top of the main bead portion of one of the separator integrated gaskets, which is disposed on one side of the membrane unit, is provided within an area where the first elastic member of another one of the separator integrated gaskets, which is disposed on another side of the membrane unit, is provided.

According to these aspects of the invention, the membrane unit is sandwiched between and pressed by the first elastic member provided in the planar region of the first separator component and the second elastic member fixed along the top of the main bead portion of the second separator component. Therefore, the peak of the surface pressure applied by the second elastic member can be increased. Furthermore, since the first elastic member is provided in the planar region of the first separator component, even if the positioning accuracy of the various members is low, the membrane unit can be more reliably sandwiched between the first elastic member and the second elastic member.

The first separator component may have a first reinforcing bead portion on both sides or one side of the first elastic member in a lateral direction.

When this configuration is adopted, deformation of the first separator component can be suppressed.

In the first separator component, a sub-bead portion may be provided, and the first elastic member may be provided in the planar region on a surface of the sub-bead portion.

When this configuration is adopted as well, deformation of the first separator component can be suppressed.

In the second separator component, a second reinforcing bead portion may be provided on both sides or one side of the second elastic member in a lateral direction, the second reinforcing bead portion protruding in a direction opposite to a protruding direction of the main bead portion.

When this configuration is adopted, deformation of the second separator component can be suppressed even further.

In the first separator component, a sub-bead portion may be provided, and the first elastic member may be provided in the planar region on a surface of the sub-bead portion, and
the second reinforcing bead portion may be disposed so as to enter the sub-bead portion.

When this configuration is adopted, deformation of the first separator component and the second separator component can be suppressed.

Note that the above-described configurations can be adopted in combination whenever possible.

### [Advantageous Effects of Invention]

As described above, according to the present invention, the sealing function can be stably exhibited.

### [Brief Description of Drawings]

[Fig. 1]

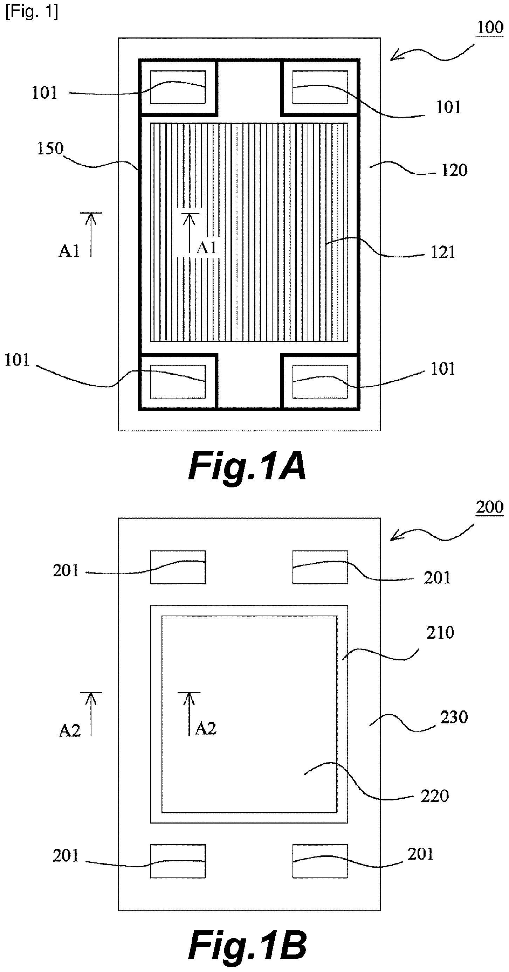

   Fig. 1 schematically shows members constituting a fuel cell according to Embodiment 1 of the present invention.
[Fig. 2]

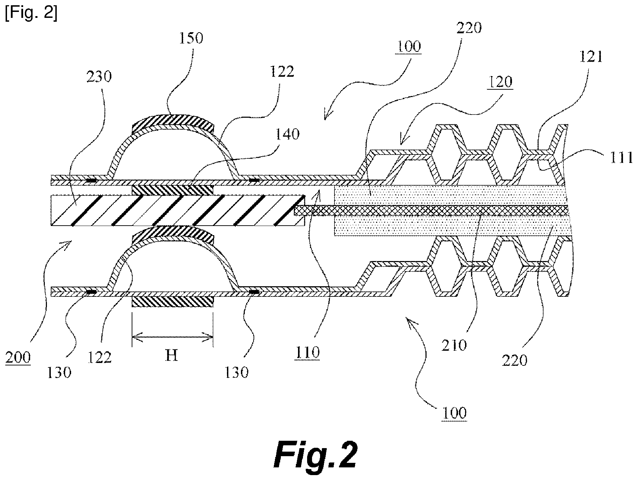

   Fig. 2 shows a portion of a schematic cross-sectional view of the fuel cell according to Embodiment 1 of the present invention.
[Fig. 3]

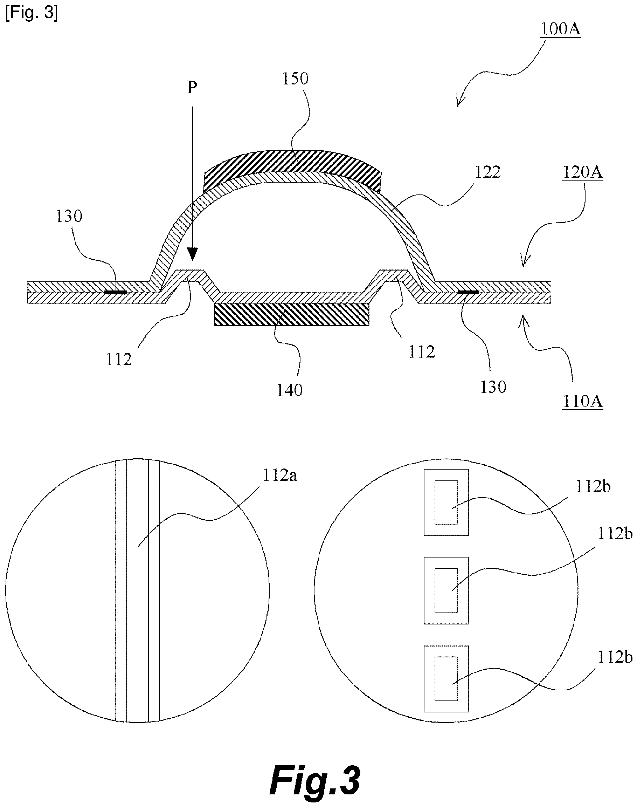

   Fig. 3 shows a portion of a schematic cross-sectional view of a separator integrated gasket according to Embodiment 2 of the present invention.
[Fig. 4]

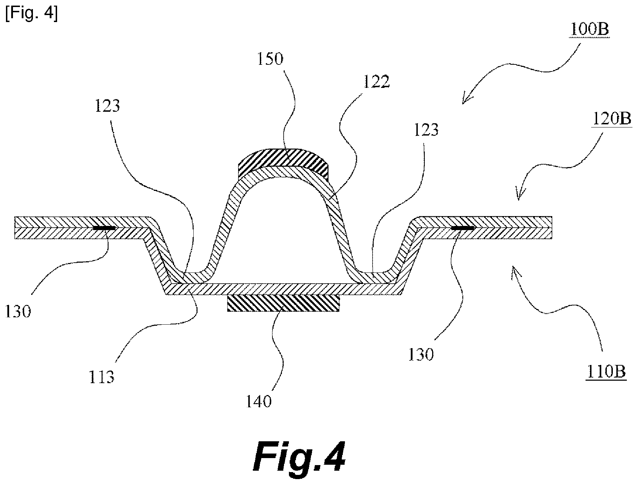

   Fig. 4 shows a portion of a schematic cross-sectional view of a separator integrated gasket according to Embodiment 3 of the present invention.
[Fig. 5]

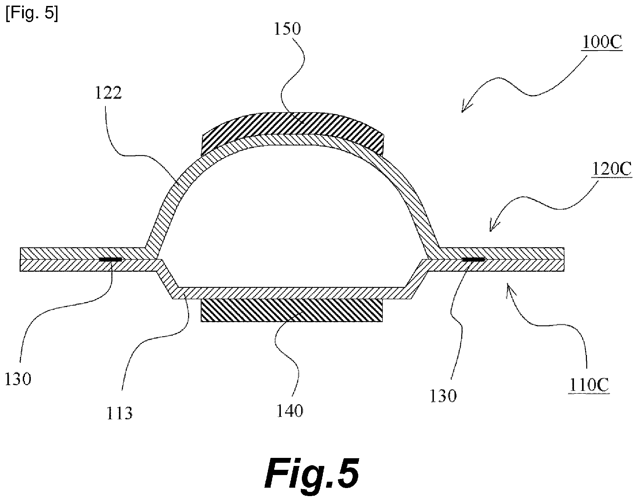

   Fig. 5 shows a portion of a schematic cross-sectional view of a separator integrated gasket according to Embodiment 4 of the present invention.
[Fig. 6]

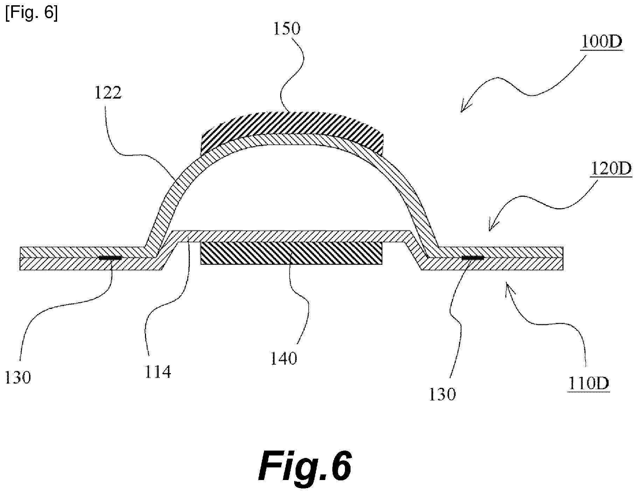

   Fig. 6 shows a portion of a schematic cross-sectional view of a separator integrated gasket according to Embodiment 5 of the present invention.
[Fig. 7]

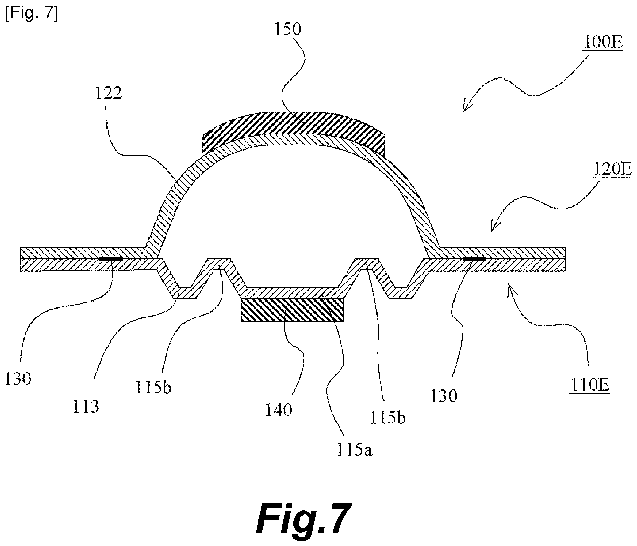

   Fig. 7 shows a portion of a schematic cross-sectional view of a separator integrated gasket according to Embodiment 6 of the present invention.
[Fig. 8]

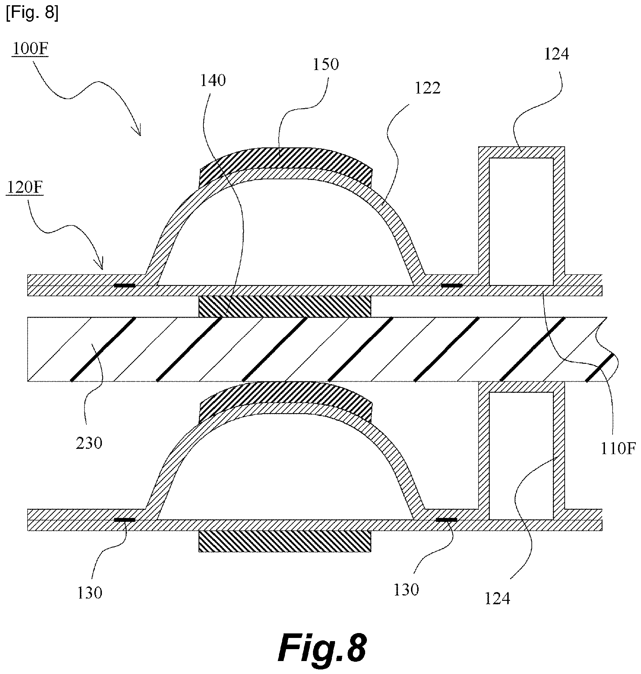

   Fig. 8 shows a portion of a schematic cross-sectional view of a fuel cell according to Embodiment 7 of the present invention.
[Fig. 9]
   Fig. 9 shows schematic cross-sectional views of a portion of a fuel cell with a separator integrated gasket of conventional art.

### [Description of Embodiments]

Hereinafter, with reference to the drawings, embodiments for implementing the present invention will be described in detail by way of example. However, the dimensions, materials, shapes, relative positions, and the like of constituent components described in the embodiments below are not intended to limit the scope of the invention thereto, unless otherwise specified.

### (Embodiment 1)

With reference to Figs. 1 and 2, a separator integrated gasket and a fuel cell according to Embodiment 1 of the present invention will be described. Fig. 1 schematically shows members constituting the fuel cell according to Embodiment 1 of the present invention; Fig. 1A is a plan view schematically showing the separator integrated gasket, and Fig. 1B is a plan view schematically showing a membrane unit. Fig. 2 shows a portion of a schematic cross-sectional view of the fuel cell according to Embodiment 1 of the present invention. The schematic cross-sectional view of a separator integrated gasket 100 in Fig. 2 corresponds to an A1-A1 cross section in Fig. 1A, and the schematic cross-sectional view of a membrane unit 200 in Fig. 2 corresponds to an A2-A2 cross section in Fig. 1B.

In general, a fuel cell is configured as a cell stack constituted by a plurality of unit cells. In Fig. 2, a schematic cross-sectional view of a portion of a cell stack constituted by a plurality of unit cells (a portion of a unit cell) is shown. A cell stack has a configuration in which separators and MEAs (Membrane Electrode Assemblies) are alternately stacked. A unit cell is constituted by an MEA and a pair of separators provided on both sides of the MEA. Note that, in cell stacks, there may be a portion where separators are provided next to each other without an MEA provided therebetween, at a location where a coolant flows.

Each MEA includes an electrolyte membrane 210 and a pair of gas diffusion layers 220 provided on both sides of the electrolyte membrane 210. In this embodiment, a reinforcement film 230 for reinforcing the electrolyte membrane 210 is provided so as to surround the electrolyte membrane 210. In this embodiment, the MEA and the reinforcement film 230 constitute the membrane unit 200. However, the membrane unit of the present invention may be constituted by an MEA without a reinforcement film.

Each separator according to this embodiment has a gasket function by including an elastic member that can come into contact (surface contact) with a membrane unit 200, and is therefore referred to as a separator integrated gasket 100 below. The fuel cell according to this embodiment has a stacked structure in which separator integrated gaskets 100 and membrane units 200 are alternately stacked, and a unit cell is constituted by a membrane unit 200 and a pair of separator integrated gaskets 100 provided on both sides of the membrane unit 200.

The separator integrated gaskets 100 and the membrane units 200 are provided with a plurality of manifolds 101 and 201 to supply a fluid (fuel gas, oxidant gas, coolant, etc.) to the unit cells. Also, ridges and grooves 111 and 121 used as flow channels through which a fluid flows are formed on both sides of each separator integrated gasket 100.

Furthermore, in order to prevent leakage of a fluid flowing between each separator integrated gasket 100 and a membrane unit 200, the separator integrated gaskets 100 are configured to have a gasket function.

### <Separator Integrated Gasket>

The separator integrated gaskets 100 will be described in detail. Each separator integrated gasket 100 is constituted by a first separator component 110 and a second separator component 120. The second separator component 120 is joined to the first separator component 110 in a superposed manner. In this embodiment, the first separator component 110 and the second separator component 120 are joined to each other via joined portions 130 formed through laser welding. Note that the first separator component 110 and the second separator component 120 can be obtained through sheet metal processing of a metal plate material such as an SUS plate or a titanium plate.

As described above, the separator integrated gaskets 100 have a gasket function. In a fuel cell, leakage of various fluids (fuel gas, oxidant gas, coolant, and the like) flowing through the manifolds 101 and 201 and a fluid flowing through the flow channels formed by the ridges and grooves 111 and 121 provided on both sides of the separator integrated gaskets 100 is to be suppressed. Therefore, in order that regions where the manifolds 101 and 201 are provided and a region where the flow passages formed by the ridges and grooves 111 and 121 are provided are sealed, sealing portions surrounding these sealed regions are to be provided, respectively. Hereinafter, a sealing structure (a structure having a gasket function) will be described in detail.

The first separator component 110 has a first elastic member 140 provided in a planar region of the first separator component 110 so as to surround each of the plurality of sealed regions. Note that the first elastic member 140 is provided only in the planar region. This applies to all of the following embodiments. The second separator component 120 has a main bead portion 122 surrounding each of the plurality of sealed regions and a second elastic member 150 fixed along the top of the main bead portion 122. In this embodiment, the protruding height of the main bead portion 122 is set to about 1 mm. When the separator integrated gaskets 100 and the membrane units 200 are alternately stacked to form a fuel cell, the first elastic members 140 and the second elastic members 150 are in contact (surface contact) with the membrane units 200 as shown in Fig. 2.

As shown in Fig. 1A, the second elastic member 150 is provided so as to surround each of the regions where the manifolds 101 are provided and the region where the flow passages formed by the ridges and grooves 121 are provided. Although a plan view of the first elastic member 140 is not shown, the first elastic member 140 is also disposed in a similar manner. In the following description, the direction in which the first elastic member 140 and the second elastic member 150 extend so as to surround the sealed regions is referred to as a "longitudinal direction", and the direction (width direction) perpendicular to the longitudinal direction is referred to as a "lateral direction".

When viewed in a direction perpendicular to the plane of the planar region in which the first elastic member 140 is provided, the top of the main bead portion 122 is provided within an area where the first elastic member 140 is provided. In this embodiment, when viewed in the same direction, the first elastic member 140 and the second elastic member 150 are provided at positions where these elastic members overlap each other over the entire lengths in the longitudinal direction. When viewed in the same direction, the first elastic member 140 and the second elastic member 150 are provided at positions where these elastic members at least partly overlap each other in the lateral direction. In this embodiment, when viewed in the same direction, the first elastic member 140 and the second elastic member 150 are provided at positions where these elastic members almost entirely overlap each other in the lateral direction. However, the first elastic member 140 and the second elastic member 150 may not have the same width in the lateral direction. Note that the width H of the first elastic member 140 in the lateral direction may be set in a range of 0.3 mm or more and 5 mm or less. EPDM, silicone rubber, fluorine rubber, and the like can be suitably used as the materials of the first elastic member 140 and the second elastic member 150.

When separator integrated gaskets 100 configured as described above are arranged on both sides of a membrane unit 200, the membrane unit 200 is sandwiched between and pressed by the first elastic member 140 and the second elastic member 150 from both sides. In this embodiment, the reinforcement film 230 of the membrane unit 200 is sandwiched between and pressed by the first elastic member 140 and the second elastic member 150 from both sides. However, although not shown, when a membrane film without a reinforcement film is used, the electrolyte membrane of the MEA may be sandwiched between and pressed by the first elastic member 140 and the second elastic member 150 from both sides. With the above-described configuration, sealed regions are formed inward of the first elastic member 140 and inward of the second elastic member 150, and leakage of various fluids is therefore suppressed.

### <Advantages of Separator Integrated Gasket of This Embodiment>

With the separator integrated gaskets 100 according to this embodiment, each membrane unit 200 is sandwiched between and pressed by the first elastic member 140 and the second elastic member 150 from both sides. Since the second elastic member 150 is fixed along the top of the main bead portion 122 of the second separator component 120, the peak of the surface pressure applied by the second elastic member 150 can be increased. Accordingly, the sealing performance can be improved.

The first elastic member 140 is provided in the planar region of the first separator component 110. Therefore, even if the positioning accuracy is low when separator integrated gaskets 100 and membrane units 200 are alternately stacked, and misalignment occurs, each membrane unit 200 is more reliably sandwiched between the first elastic member 140 and the second elastic member 150. In other words, as long as the second elastic member 150 is in contact with the membrane unit 200 at a position within the area where the first elastic member 140 that is planar is provided and is on the back side of the first elastic member 140, regardless of the position, a targeted peak of the surface pressure applied by the first elastic member 140 can be achieved, and a targeted peak of the surface pressure applied by the second elastic member 150 can be achieved. Accordingly, the sealing function cab be stably exhibited.

Note that, in this embodiment, as shown in Fig. 2, the first separator component 110 and the second separator component 120 are joined to each other at locations near the main bead portion 122 on both sides of the main bead portion 122 by the joined portions 130, respectively. Therefore, the first separator component 110 and the second separator component 120 are joined to each other in the vicinity of the sealing structure, and the sealing function can thus be exhibited even more stably.

### (Embodiment 2)

Fig. 3 shows Embodiment 2 of the present invention. In this embodiment, a configuration in which the first separator component is provided with a reinforcing bead portion will be described. The other configurations and effects are the same as those of Embodiment 1; therefore, like constituent components are denoted by like reference numerals, and their description is omitted as appropriate.

Fig. 3 shows a portion of a schematic cross-sectional view of a separator integrated gasket according to Embodiment 2 of the present invention. Fig. 3 is an enlarged view of a cross section of the separator integrated gasket in the vicinity of a portion thereof where a gasket function is exhibited.

A separator integrated gasket 100A according to this embodiment is constituted by a first separator component 110A and a second separator component 120A. The second separator component 120A has the same configuration as the second separator component 120 of Embodiment 1, and is therefore not described further here. This embodiment and Embodiment 1 are the same in that the first separator component 110A and the second separator component 120A are joined to each other at locations near the main bead portion 122 on both sides of the main bead portion 122 by joined portions 130, respectively.

Furthermore, this embodiment and Embodiment 1 are the same in that the first elastic member 140 is provided in a planar region of the first separator component 110A. This embodiment differs from Embodiment 1 in that the first separator component 110A has first reinforcing bead portions 112 provided on both sides of the first elastic member 140 in the lateral direction. Note that the positional relationship between the first elastic member 140 and the second elastic member 150 is as described in Embodiment 1.

The first reinforcing bead portions 112 may be continuously or intermittently provided along the first elastic member 140, as shown in two different plan views as viewed in the direction illustrated by an arrow P in Fig. 3. In a circle at the lower left part of Fig. 3, a first reinforcing bead portion 112a illustrates a case of continuous arrangement. In a circle at the lower right part of Fig. 3, first reinforcing bead portions 112b illustrate a case of intermittent arrangement.

With the thus configured separator integrated gasket 100A according to this embodiment, similar effects to those of Embodiment 1 can be obtained. In addition, in this embodiment, as a result of providing the first reinforcing bead portions 112, portions of the first separator component 110A that are located in the vicinity of the region where the first elastic member 140 is provided are unlikely to deform. Therefore, even if a pressing force exerted by the main bead portion 122 acts on the first separator component 110A via the second elastic member 150, the membrane unit 200, and the first elastic member 140, deformation of the first separator component 110A can be suppressed. Although the configuration in which the first reinforcing bead portions 112 are provided on both sides of the first elastic member 140 in the lateral direction has been described in this embodiment, a configuration may be adopted in which a first reinforcing bead portion 112 is provided only on one side of the first elastic member 140 in the lateral direction.

### (Embodiment 3)

Fig. 4 shows Embodiment 3 of the present invention. In this embodiment, a configuration in which the first separator component is provided with a sub-bead portion and the second separator component is provided with a reinforcing bead portion will be described. The other configurations and effects are the same as those of Embodiment 1; therefore, like constituent components are denoted by like reference numerals, and their description is omitted as appropriate.

Fig. 4 shows a portion of a schematic cross-sectional view of a separator integrated gasket according to Embodiment 3 of the present invention. Fig. 4 is an enlarged view of a cross section of the separator integrated gasket in the vicinity of a portion thereof where a gasket function is exhibited.

A separator integrated gasket 100B according to this embodiment is constituted by a first separator component 110B and a second separator component 120B. In the first separator component 110B, a sub-bead portion 113 is provided so as to surround the sealed regions, and the first elastic member 140 is provided in a planar region on the surface of the sub-bead portion. In the second separator component 120B, second reinforcing bead portions 123 protruding in the direction opposite to the protruding direction of the main bead portion 122 are provided on both sides of the second elastic member 150 in the lateral direction. The second reinforcing bead portions 123 are disposed so as to enter the sub-bead portion 113.

The first separator component 110B and the second separator component 120B are joined to each other at locations near the sub-bead portion 113 on both sides of the sub-bead portion 113 by joined portions 130, respectively. The positional relationship between the first elastic member 140 and the second elastic member 150 is as described in Embodiment 1.

With the thus configured separator integrated gasket 100B according to this embodiment, similar effects to those of Embodiment 1 above can be obtained. In addition, in this embodiment, even if a pressing force exerted by the main bead portion 122 acts on the first separator component 110B via the second elastic member 150, the membrane unit 200, and the first elastic member 140, deformation of the first separator component 110B can be suppressed. In this embodiment, the first separator component 110B is unlikely to deform due to the sub-bead portion 113. Further, even if the sub-bead portion 113 is about to be deformed, the sub-bead portion 113 abuts against the second reinforcing bead portions 123 of the second separator component 120B, and therefore, deformation of the first separator component 110B can be suppressed. Although the configuration in which the second reinforcing bead portions 123 are provided on both sides of the second elastic member 150 in the lateral direction has been described in this embodiment, a configuration may be adopted in which a second reinforcing bead portion 123 is provided only on one side of the second elastic member 150 in the lateral direction.

### (Embodiment 4)

Fig. 5 shows Embodiment 4 of the present invention. In this embodiment, a configuration in which the first separator component is provided with a sub-bead portion will be described. The other configurations and effects are the same as those of Embodiment 1; therefore, like constituent components are denoted by like reference numerals, and their description is omitted as appropriate.

Fig. 5 shows a portion of a schematic cross-sectional view of a separator integrated gasket according to Embodiment 4 of the present invention. Fig. 5 is an enlarged view of a cross section of the separator integrated gasket in the vicinity of a portion thereof where a gasket function is exhibited.

A separator integrated gasket 100C according to this embodiment is constituted by a first separator component 110C and a second separator component 120C. The second separator component 120C has the same configuration as the second separator component 120 of Embodiment 1, and is therefore not described further here. This embodiment and Embodiment 1 are the same in that the first separator component 110C and the second separator component 120C are joined to each other at locations near the main bead portion 122 on both sides of the main bead portion 122 by joined portions 130, respectively.

In this embodiment, in the first separator component 110C, a sub-bead portion 113 is provided so as to surround the sealed regions, and the first elastic member 140 is provided in a planar region on the surface of the sub-bead portion. The sub-bead portion 113 is configured to protrude to the opposite side of the second separator component 120C. The positional relationship between the first elastic member 140 and the second elastic member 150 is as described in Embodiment 1.

With the thus configured separator integrated gasket 100C according to this embodiment, similar effects to those of Embodiment 1 can be obtained. In addition, in this embodiment, as a result of providing the sub-bead portion 113, portions of the first separator component 110A that are located in the vicinity of the region where the first elastic member 140 is provided are unlikely to deform. Therefore, even if a pressing force exerted by the main bead portion 122 acts on the first separator component 110C via the second elastic member 150, the membrane unit 200, and the first elastic member 140, deformation of the first separator component 110C can be suppressed.

### (Embodiment 5)

Fig. 6 shows Embodiment 5 of the present invention. In this embodiment, a configuration in which the first separator component is provided with a sub-bead portion will be described. The other configurations and effects are the same as those of Embodiment 1; therefore, like constituent components are denoted by like reference numerals, and their description is omitted as appropriate.

Fig. 6 shows a portion of a schematic cross-sectional view of a separator integrated gasket according to Embodiment 5 of the present invention. Fig. 6 is an enlarged view of a cross section of the separator integrated gasket in the vicinity of a portion thereof where a gasket function is exhibited.

A separator integrated gasket 100D according to this embodiment is constituted by a first separator component 110D and a second separator component 120D. The second separator component 120D has the same configuration as the second separator component 120 of Embodiment 1, and is therefore not described further here. This embodiment and Embodiment 1 are the same in that the first separator component 110D and the second separator component 120D are joined to each other at locations near the main bead portion 122 on both sides of the main bead portion 122 by joined portions 130, respectively.

In this embodiment, in the first separator component 110D, a sub-bead portion 114 is provided so as to surround the sealed regions, and the first elastic member 140 is provided in a planar region on the surface of the sub-bead portion. The sub-bead portion 114 is configured to protrude to the side on which the second separator component 120D is provided and enter the main bead portion 122. The positional relationship between the first elastic member 140 and the second elastic member 150 is as described in Embodiment 1.

With the thus configured separator integrated gasket 100D according to this embodiment, similar effects to those of Embodiment 1 can be obtained. In addition, in this embodiment, as a result of providing the sub-bead portion 114, portions of the first separator component 110D that are located in the vicinity of the region where the first elastic member 140 is provided are unlikely to deform. Therefore, even if a pressing force exerted by the main bead portion 122 acts on the first separator component 110D via the second elastic member 150, the membrane unit 200, and the first elastic member 140, deformation of the first separator component 110D can be suppressed.

### (Embodiment 6)

Fig. 7 shows Embodiment 6 of the present invention. In this embodiment, a configuration in which the first separator component is provided with a sub-bead portion and is also provided with a reinforcing bead portion will be described. The other configurations and effects are the same as those of Embodiment 1; therefore, like constituent components are denoted by like reference numerals, and their description is omitted as appropriate.

Fig. 7 shows a portion of a schematic cross-sectional view of a separator integrated gasket according to Embodiment 6 of the present invention. Fig. 7 is an enlarged view of a cross section of the separator integrated gasket in the vicinity of a portion thereof where a gasket function is exhibited.

A separator integrated gasket 100E according to this embodiment is constituted by a first separator component 110E and a second separator component 120E. The second separator component 120E has the same configuration as the second separator component 120 of Embodiment 1, and is therefore not described further here. This embodiment and Embodiment 1 are the same in that the first separator component 110E and the second separator component 120E are joined to each other at locations near the main bead portion 122 on both sides of the main bead portion 122 by joined portions 130, respectively.

In this embodiment, in the first separator component 110E, sub-bead portion 113 is provided so as to surround the sealed regions, and the first elastic member 140 is provided in a planar region on the surface of the sub-bead portion. The sub-bead portion 113 is configured to protrude to the opposite side of the second separator component 120E. The positional relationship between the first elastic member 140 and the second elastic member 150 is as described in Embodiment 1. This embodiment differs from Embodiment 4 in that first reinforcing bead portions 112 are provided on both sides of the first elastic member 140 in the lateral direction.

With the thus configured separator integrated gasket 100E according to this embodiment, similar effects to those of Embodiment 1 above can be obtained. In addition, in this embodiment, as a result of providing the sub-bead portion 113 and the first reinforcing bead portions 112, portions of the first separator component 110E that are located in the vicinity of the region where the first elastic member 140 is provided is unlikely to deform. Therefore, even if a pressing force exerted by the main bead portion 122 acts on the first separator component 110E via the second elastic member 150, the membrane unit 200, and the first elastic member 140, deformation of the first separator component 110E can be suppressed.

### (Embodiment 7)

Fig. 8 shows Embodiment 7 of the present invention. In this embodiment, a configuration in which the second separator component is provided with a stopper portion will be described. The other configurations and effects are the same as those of Embodiment 1; therefore, like constituent components are denoted by like reference numerals, and their description is omitted as appropriate.

Fig. 8 shows a portion of a schematic cross-sectional view of a fuel cell including a separator integrated gasket according to Embodiment 7 of the present invention. Fig. 8 is an enlarged view of a cross section of the separator integrated gasket in the vicinity of a portion thereof where a gasket function is exhibited.

A separator integrated gasket 100F according to this embodiment is constituted by a first separator component 110F and a second separator component 120F. The first separator component 110F has the same configuration as the first separator component 110 of Embodiment 1, and is therefore not described further here. This embodiment and Embodiment 1 are the same in that the first separator component 110F and the second separator component 120F are joined to each other at locations near the main bead portion 122 on both sides of the main bead portion 122 by joined portions 130, respectively.

In this embodiment, the second separator component 120F has a stopper portion 124 provided further inward (on the side where the ridges and grooves 121 serving as flow channels are provided) than the main bead portion 122, the stopper portion 124 being located in the vicinity of the joined portion 130 and abutting against the membrane unit 200. This is the only difference between the configuration of the second separator component 120F and the configuration of the second separator component 120 of Embodiment 1.

With the thus configured separator integrated gasket 100F according to this embodiment, similar effects to those of Embodiment 1 can be obtained. In addition, in this embodiment, since the stopper portion 124 is provided, deformation of the separator integrated gasket 100F can be suppressed. The configuration related to the stopper portion 124 shown in this embodiment is applicable to any of the configurations of Embodiments 2 to 6.

### (Other Remarks)

In the foregoing embodiments, a configuration where a stacked structure including a separator integrated gasket is used as a fuel cell has been described, but the above-described stacked structure can also be used as a hydrogen generator. More specifically, in the case where a stacked structure such as that described above is used as a fuel cell, when oxygen is fed to one side of an electrolyte membrane and hydrogen is fed to the other side, a chemical reaction occurs in the electrolyte membrane, and thus, electricity can be generated. On the other hand, when water and oxygen are fed to one side of the electrolyte membrane, electrolysis occurs in the electrolyte membrane, and thus, water and hydrogen flow on the other side of the electrolyte membrane. In this manner, hydrogen can be extracted, and the above-described stacked structure can therefore be used as a hydrogen generator.

### [Reference Signs List]

100, 100A, 100B, 100C, 100D, 100E, 100F Separator integrated gasket
101 Manifold
110, 110A, 110B, 110C, 110D, 110E, 110F First separator component
111 Ridge and groove
112, 112a, 112b First reinforcing bead portion
113, 114 Sub-bead portion
120, 120A, 120B, 120C, 120D, 120E, 120F Second separator component
121 Ridge and groove
122 Main bead portion
123 Second reinforcing bead portion
124 Stopper portion
130 Joined portion
140 First elastic member
150 Second elastic member
200 Membrane unit
201 Manifold
210 Electrolyte membrane
220 Gas diffusion layer
230 Reinforcement film

## Claims

1. A separator integrated gasket included in a stacked structure in which membrane units each having an electrolyte membrane and separators are alternately stacked and having a gasket function by including an elastic member configured to come into contact with the membrane unit, the separator integrated gasket comprising:
a first separator component; and
a second separator component joined to the first separator component in a superposed manner,
the first separator component having a first elastic member provided in a planar region of the first separator component, and
the second separator component having a main bead portion and a second elastic member fixed along the top of the main bead portion.

2. The separator integrated gasket according to claim 1, wherein
when viewed in a direction perpendicular to a plane of the planar region, the top of the main bead portion is provided within an area where the first elastic member is provided.

3. The separator integrated gasket according to claim 1 or 2, wherein
the first separator component has a first reinforcing bead portion on both sides or one side of the first elastic member in a lateral direction.

4. The separator integrated gasket according to claim 1, 2, or 3, wherein
in the first separator component, a sub-bead portion is provided, and the first elastic member is provided in the planar region on a surface of the sub-bead portion.

5. The separator integrated gasket according to claim 1, 2, or 3, wherein
in the second separator component, a second reinforcing bead portion is provided on both sides or one side of the second elastic member in a lateral direction, the second reinforcing bead portion protruding in a direction opposite to a protruding direction of the main bead portion.

6. The separator integrated gasket according to claim 5, wherein
in the first separator component, a sub-bead portion is provided, and the first elastic member is provided in the planar region on a surface of the sub-bead portion, and
the second reinforcing bead portion is disposed so as to enter the sub-bead portion.

7. A stacked structure in which membrane units each having an electrolyte membrane and separators are alternately stacked,
the separators being separator integrated gaskets each having a gasket function by including an elastic member configured to come into contact with the membrane unit,
each separator integrated gasket including:
a first separator component; and
a second separator component joined to the first separator component in a superposed manner,
the first separator component having a first elastic member provided in a planar region of the first separator component, and
the second separator component having a main bead portion and a second elastic member fixed along the top of the main bead portion, and
when viewed in a direction perpendicular to a plane of the planar region, the top of the main bead portion of one of the separator integrated gaskets, which is disposed on one side of the membrane unit, is provided within an area where the first elastic member of another one of the separator integrated gaskets, which is disposed on another side of the membrane unit, is provided.

8. The stacked structure according to claim 7, wherein
the first separator component has a first reinforcing bead portion on both sides or one side of the first elastic member in a lateral direction.

9. The stacked structure according to claim 7 or 8, wherein
in the first separator component, a sub-bead portion is provided, and the first elastic member is provided in the planar region on a surface of the sub-bead portion.

10. The stacked structure according to claim 7 or 8, wherein
in the second separator component, a second reinforcing bead portion is provided on both sides or one side of the second elastic member in a lateral direction, the second reinforcing bead portion protruding in a direction opposite to a protruding direction of the main bead portion.

11. The stacked structure according to claim 10, wherein
in the first separator component, a sub-bead portion is provided, and the first elastic member is provided in the planar region on a surface of the sub-bead portion, and
the second reinforcing bead portion is disposed so as to enter the sub-bead portion.
